# EUROPEAN PATENT SPECIFICATION

(11) **EP 2 060 185 B1**
(45) Date of publication and mention of the grant of the patent: **16.06.2010**
(21) Application number: 08075874.1
(22) Date of filing: 11.11.2008
(51) Int. Cl.: A22C 29/00, A22C 29/02, A22C 29/04, A23L 1/325, A23L 1/33, A23L 1/333

(54) **Methods and means for the preparation of crustaceans and shellfish**
Verfahren und Vorrichtung zur Behandlung von Krustentieren und Schalentieren
Procédé et dispositif pour la préparation de crustacés et de coquillages

(30) Priority: 15.11.2007 NL 1034699
(43) Date of publication of application: 20.05.2009
(73) Proprietor: Alginac B.V., 4401 NG Yerseke (NL)
(72) Inventor: Van der Endt, Jan Cornelis, 4401 NG Yerseke (NL)
(74) Representative: van Kooij, Adriaan

(56) References cited:
- JP-A- 3 236 736
- JP-A- 4 131 039
- US-A- 4 537 149
- US-A- 5 165 361
- K. DE HEER: "WADDENVOER" BERICHTEN 50, [Online] 1 June 2003 (2003-06-01), XP002486323 NL Retrieved from the Internet: URL:http://www.wadvaarders.nl/berichten/be r50/waddenvoer.htm> [retrieved on 2006-06-12]
- ANONYMOUS: "Een heerlijk mosselrecept" VRIENDEN VAN DE MOSSEL, [Online] XP002486232 NL Retrieved from the Internet: URL:http://www.vriendenvandemossel.nl/nl/d efault.php?page=63> [retrieved on 2008-06-12]

## Description

The present invention relates to methods for the preparation of crustaceans or shellfish, and to providing means for use in the method, see e.g. document JP-A-3 236 736. More specifically, the present invention relates to the preparation of pre-packaged and life crustaceans or shellfish using purified seawater and to packaged purified seawater for use in the method.

Generally, crustaceans or shellfish are pre-packaged alive and transported to purchasers, such as restaurants, caterers or the consumer, after harvesting. In classical cases, crustaceans and shellfish are packaged in nets, jute bags, or other moisture permeable packages and, packaged in this manner, transported to the purchaser. However, the in this way packaged crustaceans or shellfish have a very limited storage life resulting in that only a very limited time is available between packaging and consuming of crustaceans or shellfish.

A large research effort has been directed to lengthen the time available between (pre)packaging and consumption of life crustaceans or shellfish. This research effort has provided novel packaging methods and packages of crustaceans or shellfish using packaging and storing of the crustaceans or shellfish under special gas mixtures. These packaging methods provided a lengthening of the time available between packaging and consuming until approximately 8 days.

Despite this significant progress with respect to (pre)packaging and storing of life crustaceans or shellfish, the decay process, which immediately starts after harvesting the life crustaceans or shellfish, is only delayed but not arrested. A consequence, even the most optimally (pre)packaged life crustaceans or shellfish are subjected to a certain loss of taste and quality before being consumed.

It is an object of the present invention to at least partially reduce, or even completely abolish, this loss of taste and quality by subjecting the (pre)packed life crustaceans or shellfish to a revitalisation treatment before consumption.

For this, the present invention provides a method for the preparation of pre-packed and life crustaceans or shellfish, comprising:
a) contacting the pre-packed and life crustaceans or shellfish with at least 0.3 litre purified seawater per kilogram crustaceans or shellfish; and
b) incubating the life crustaceans or shellfish in the purified seawater during a time period sufficient for revitalizing the crustaceans or shellfish.

According to the present invention, crustaceans or shellfish can be (pre)packaged using any usual method, for example, in a water permeable package such as a net or jute bag.

However, specially preferred, particularly in relation to the provision of an optimal revitalization, is that the crustaceans or shellfish are (pre)packed under a protective gas atmosphere, for example for this purpose specifically developed CO₂/O₂ mixtures described in NL1005991 of Prins & Dingemans B.V. or NL1032763 of Seafarm B.V.

The present invention is not limited to a specific species of crustaceans or shellfish, but preferably relates to crustaceans and as not limiting preferred examples can be mentioned oysters, mussels, mantels, razor clams, carpet clams or cockles. However, according to the present invention, mussels are most preferred and particularly the Mytilus Edulus mussel.

According to the present invention, the (pre)packed and life crustaceans or shellfish are contacted with at least 0.3 litre purified seawater per kilogram crustaceans or shellfish.

The term "purified seawater", as used in the present context, relates to purified seawater originating from a natural source of seawater. The purified seawater according to the present invention is only subjected to a minimal number of purification treatments as compared to the original source of seawater. These purification treatments primarily relate to the removal of undesired impurities and/or contaminations present in the seawater source. This results in that at least the resolved salt compounds, and the concentrations thereof, are substantially similar in the present purified seawater as compared to the seawater source.

The pre)packed and life crustaceans or shellfish are in the present step (a) contacted with the present purified seawater. In the usual cases, this step comprises the removal of the package and the transfer of the life crustaceans or shellfish into a container, for example a pan, containing the specified amount of purified seawater.

For an optimal revitalization in present step (b), the life crustaceans or shellfish are contacted with at least 0.3 litre of purified seawater per kilogram crustaceans or shellfish, such as 0.3, 0.4, 0.5, 0.6, 0.7, 0.8, 0.9, 1, 1.5, 2, 2.5, 3, 3.5, 4, 4.5 or 5 litres per kilogram crustaceans or shellfish although, according to the present invention, larger amounts of purified seawater are also considered. Preferred is 0.35 to 0.5 litre purified seawater per kilogram crustaceans or shellfish.

In the present step (b), the life crustaceans or shellfish are incubated in the purified seawater for a time period being sufficient for revitalizing the crustaceans or shellfish. The exact amount of time for this revitalization step is dependent on the quality, i.e., the degree of degeneration, of the (pre)packaged crustaceans or shellfish used.

The revitalization of the crustaceans or shellfish obtained in step (a) can be easily determined visually when considering the sedimentation of the crustaceans or shellfish. This because the revitalization according to the present invention at least comprises the intake of the present purified seawater by the crustaceans or shellfish, causing them to become heavier. Especially in a preferred embodiment, the closing of the two shells is a second visual indication of revitalization.

After present step (b), the quality, especially expressed as taste, is remarkably improved as compared to the crustaceans or shellfish according to the prior art being not subjected to the present steps (a) and (b).

Preferably, the present method also comprises the removal of floating crustaceans or shellfish after step (b). This because these floating crustaceans or shellfish were already too weak, or had even died, before carrying out the present method causing them to be no longer susceptible for the present revitalization.

After the revitalization step (b), the life crustaceans or shellfish can be further prepared in the usual way, for example, the direct consumption in case of oysters, or a boiling step in case of mussels.

According to an especially preferred embodiment of the present invention, the crustaceans or shellfish are further prepared by boiling them in the purified seawater according to the present invention. Through the use of the present purified seawater for further preparation, an edible product is provided with an exceptional quality almost comparable, or even equal, to the quality of freshly caught and prepared crustaceans or shellfish.

In this embodiment it is beneficial, especially considering the number of preparation steps, to perform both revitalization and boiling in the same purified seawater.

The purified seawater according to the present invention has preferably been subjected to a purification step comprising an antimicrobial treatment to reduce, or even completely remove, the microorganism present, and especially algae.

Considering, for a consumer, a safe antimicrobial treatment of the seawater source, it is preferred not to perform this step using chemical means, but instead using an irradiation with high-energy rays, for example gamma-rays, heat-rays or UV-rays. Preferred is a UV radiation when considering costs and efficiency.

Besides the antimicrobial treatment, the present source of seawater for the present purified seawater has also been subjected to one or more filtration treatments for further removal, or at least reduction, of sediment, non-solvable ingredients and/or other impurities. These filtration techniques are generally known in the art of water purification and are therefore not further detailed.

After been subjected to the above treatments, the purified seawater is at least visually clear and safe for human consumption.

In an especially preferred embodiment of the present invention, the seawater source for the present purified seawater is the same seawater, although purified, wherein the present life and (pre)packed crustaceans or shellfish were grown.

When using the purified seawater of this embodiment in the present method, the revitalization will be optimally. This because the present crustaceans or shellfish are optimally adjusted to grow, and to live, in this water and therefore a revitalization in the present purified, although regarding composition substantially the same, seawater inherently will also proceed optimally.

Considering the exceptional good quality of the Oosterschelde, an estuary in the Netherlands with an open passage towards the North Sea, but also supplied by fresh water rivers, it is most preferred that the seawater source is originating from the Oosterschelde.

Considering the beneficiary methods as outlined above, (pre)packaged purified seawater may be used in the present invention.

However, (pre)packaged seawater is not limited to use in the present method but can, for example, also be used for the preparation of sea fish, bouillons, for filling salt water aquaria or pools, or other suitable consumer use, for example, for the treatment of skin diseases, or as replacement of tap water supplemented with salt for the preparation of many other dishes.

As is already indicated with respect to the method, the purified seawater is preferably subjected to an antimicrobial treatment and/or filtration thereby providing visually clear purified seawater.

When taken into account potential microbial growth, and especially algae growth, the purified seawater is preferably packaged in a light-closed container.

Considering the exceptional good quality and purity of the Oosterschelde, an estuary in the Netherlands with an open passage towards the North Sea, but also supplied by fresh water rivers, it is most preferred that the seawater source for the (pre)packed purified seawater originates from the Oosterschelde.

A paper board container, as sold under the trade name Elopak, may comprise purified, i.e., antimicrobially treated and filtrated, seawater originating from the Oosterschelde.

## Claims

1. Method for the preparation of (pre)packed and life crustaceans or shellfish comprising:
a) contacting the crustaceans or shellfish with purified seawater wherein at least 0.3 litre of purified seawater per kilogram crustaceans or shellfish is used;
b) incubation the crustaceans or shellfish, in the purified seawater for a time period being sufficient to revitalize the crustaceans or shellfish.

2. Method according to claim 1, wherein the crustaceans or shellfish are crustaceans.

3. Method according to claim 2, wherein the crustaceans are chosen from the group consisting of oysters, mussels, mantels, razor clams, carpet clams or cockles.

4. Method according to claim 3, wherein the crustaceans are mussels.

5. Method according to any of the claims 1 to 4, wherein the purified seawater is antimicrobially treated sea water.

6. Method according to claim 5, wherein the antimicrobial treatment comprises irradiating the seawater with high-energy radiation.

7. Method according to claim 6, wherein the high-energy radiation is ultra-violet (UV) radiation.

8. Method according to any of the claims 1 to 7, wherein the purified seawater is filtration treated seawater for the removal of sediment, further insoluble ingredients and/or impurities.

9. Method according to any of the claims 1 to 8, wherein the source of said purified seawater is seawater wherein the crustaceans or shellfish are bred and grown.

10. Method according to any of the claims 1 to 9, wherein said revitalization comprises revitalisation of the crustaceans or shellfish for a time period sufficient to allow closing and sedimenting of the crustaceans.

11. Method according to any of the claims 1 to 10, further comprising, after step (b), the removal, if present, of floating crustaceans.

12. Method according to any of the claims 1 to 11, wherein as source of the purified seawater, Oosterschelde seawater is used.

13. Method according to any of the claims 1 to 12, wherein the method further comprises, after step (b), boiling of the crustaceans or shellfish in the purified seawater.

14. Use of purified seawater, as defined in any of the claims 1 to 13, for the preparation of crustaceans or shellfish as defined in any of the claims 1 to 13.

## Patentansprüche

1. Verfahren für die Behandlung von (vor)verpackten und lebenden Krustentieren oder Schalentieren, umfassend die Schritte, dass:
(a) die Krustentiere oder die Schalentiere in Kontakt mit aufbereitetem Meerwasser gebracht werden, wobei wenigstens 0,3 Liter an aufbereitetem Meerwasser pro Kilogramm Krustentiere oder Schalentiere verwendet wird; und
(b) die Krustentiere oder die Schalentiere in dem aufbereiteten Meerwasser für eine Zeitspanne inkubiert werden, die dafür ausreicht, um die Krustentiere oder die Schalentiere wieder zu beleben.

2. Verfahren nach Anspruch 1, wobei die Krustentiere oder die Schalentiere Krustentiere sind.

3. Verfahren nach Anspruch 2, wobei die Krustentiere aus der Gruppe ausgewählt sind, die aus Austern, Miesmuscheln, Manteltiere, Scheidenmuscheln, Venusmuscheln oder Herzmuscheln besteht.

4. Verfahren nach Anspruch 3, wobei die Krustentiere Miesmuscheln sind.

5. Verfahren nach irgendeinem der Ansprüche 1 bis 4, wobei das aufbereitete Meerwasser antimikrobiell behandeltes Meerwasser ist.

6. Verfahren nach Anspruch 5, wobei die antimikrobielle Behandlung den Schritt umfasst, dass das aufbereitete Meerwasser mit einer hochenergetischen Strahlung bestrahlt wird.

7. Verfahren nach Anspruch 6, wobei die hochenergetische Strahlung ultraviolettes (UV-) Licht ist.

8. Verfahren nach irgendeinem der Ansprüche 1 bis 7, wobei das aufbereitete Meerwasser durch Filtern behandeltes Meerwasser ist, um Sedimente, weitere unlösliche Bestandteile und / oder Verunreinigungen zu entfernen.

9. Verfahren nach irgendeinem der Ansprüche 1 bis 8, wobei die Quelle für das besagte aufbereitete Meerwasser Meerwasser ist, und wobei die Krustentiere oder die Schalentiere gezüchtet und angebaut sind.

10. Verfahren nach irgendeinem der Ansprüche 1 bis 9, wobei die besagte Wiederbelebung den Schritt umfasst, dass die Krustentiere oder die Schalentiere für eine Zeitspanne wieder belebt werden, die dafür ausreicht, um zu erlauben, dass die Krustentiere sich schließen und sich absetzen.

11. Verfahren nach irgendeinem der Ansprüche 1 bis 10, umfassend des Weiteren den Schritt, dass nach dem Schritt (b) schwebende Krustentiere, falls solche vorhanden sein sollten, entfernt werden.

12. Verfahren nach irgendeinem der Ansprüche 1 bis 11, wobei als die Quelle für das besagte aufbereitete Meerwasser Meerwasser aus der Oosterschelde verwendet wird.

13. Verfahren nach irgendeinem der Ansprüche 1 bis 12, wobei das Verfahren des Weiteren den Schritt umfasst, dass nach dem Schritt (b) die Krustentiere oder die Schalentiere in dem aufbereiteten Meerwasser gekocht werden.

14. Verwendung von aufbereitetem Meerwasser, wie es in irgendeinem der Ansprüche 1 bis 13 definiert ist, für die Behandlung von Krustentieren oder Schalentieren, wie sie in irgendeinem der Ansprüche 1 bis 13 definiert ist.

## Revendications

1. Procédé de préparation de crustacés ou de mollusques (pré)emballés et vivants comprenant :
a) la mise en contact des crustacés ou des mollusques avec de l'eau de mer purifiée, au moins 0,3 litre d'eau de mer purifiée étant utilisée par kilogramme de crustacés ou de mollusques ;
b) l'incubation des crustacés ou des mollusques dans l'eau de mer purifiée pendant une durée suffisante pour revitaliser les crustacés ou les mollusques.

2. Procédé selon la revendication 1, dans lequel les crustacés ou les mollusques sont des crustacés.

3. Procédé selon la revendication 2, dans lequel les crustacés sont choisis parmi le groupe consistant en des huîtres, des moules, des manteaux, des couteaux, des clams ou des coques.

4. Procédé selon la revendication 3, dans lequel les crustacés sont des moules.

5. Procédé selon l'une quelconque des revendications 1 à 4, dans lequel l'eau de mer purifiée est de l'eau de mer traitée à l'anti-microbes.

6. Procédé selon la revendication 5, dans lequel le traitement antimicrobien comprend l'irradiation de l'eau de mer avec un rayonnement à haute énergie.

7. Procédé selon la revendication 6, dans lequel le rayonnement à haute énergie est un rayonnement ultraviolet (UV).

8. Procédé selon l'une quelconque des revendications 1 à 7, dans lequel l'eau de mer purifiée est de l'eau de mer traitée par filtration afin d'éliminer les sédiments, les autres particules insolubles et/ou les impuretés.

9. Procédé selon l'une quelconque des revendications 1 à 8, dans lequel ladite eau de mer purifiée est l'eau de mer dans laquelle les crustacés ou les mollusques sont nourris et élevés.

10. Procédé selon l'une quelconque des revendications 1 à 9, dans lequel ladite revitalisation comprend une revitalisation des crustacés ou des mollusques pendant une durée suffisante pour permettre la fermeture et la sédimentation des crustacés.

11. Procédé selon l'une quelconque des revendications 1 à 10, comprenant en outre, après l'étape b), l'élimination, le cas échéant, des crustacés remontés en surface.

12. Procédé selon l'une quelconque des revendications 1 à 11, dans lequel de l'eau de mer de Oosterschelde est utilisée comme eau de mer purifiée.

13. Procédé selon l'une quelconque des revendications 1 à 12, dans lequel le procédé comprend en outre, après l'étape b), l'ébouillantage des crustacés ou des mollusques dans l'eau de mer purifiée.

14. Utilisation d'eau de mer purifiée, selon l'une quelconque des revendications 1 à 13, pour la préparation de crustacés ou de mollusques selon l'une quelconque des revendications 1 à 13.
